(19) Europäisches Patentamt
European Patent Office
Office européen des brevets

(11) **EP 4 317 119 A1**

(12) **EUROPEAN PATENT APPLICATION**

(43) Date of publication:
**07.02.2024 Bulletin 2024/06**

(21) Application number: **22188759.9**

(22) Date of filing: **04.08.2022**

(51) International Patent Classification (IPC):
*C05B 1/00* $^{(2006.01)}$   *C05B 7/00* $^{(2006.01)}$
*C05C 3/00* $^{(2006.01)}$   *C05D 3/02* $^{(2006.01)}$
*C05D 9/02* $^{(2006.01)}$   *C05G 5/40* $^{(2020.01)}$
*C05G 5/12* $^{(2020.01)}$

(52) Cooperative Patent Classification (CPC):
(C-Sets available)
**C05D 9/02; C05B 1/00; C05B 7/00; C05C 3/00;
C05G 5/12; C05G 5/40**                    (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **SABIC Global Technologies B.V.
4612 PX Bergen op Zoom (NL)**

(72) Inventors:
• **MAMEDOV, Aghaddin
  Texas, 77478 (US)**
• **AL-RABHI, Mohamed
  Texas, 77478 (US)**
• **HEGDE, Ravi
  562125 Bangalore (IN)**

(74) Representative: **J A Kemp LLP
80 Turnmill Street
London EC1M 5QU (GB)**

(54) **COMPLEX FERTILIZER COMPRISING NITROGEN, PHOSPHOROUS, SULFUR, CALCIUM AND MAGNESIUM NUTRIENTS**

(57)    Disclosed is a fertilizer containing a mixture containing i) calcium ammonium phosphate ($CaNH_4PO_4$), magnesium ammonium phosphate ($MgNH_4PO_4$), or a combination of $CaNH_4PO_4$ and $MgNH_4PO_4$ and ii) a mixture of calcium sulfate and ammonium sulfate ($(NH_4)_2Ca(SO_4)_2$), a mixture of magnesium sulfate and ammonium sulfate ($(NH_4)_2Mg(SO_4)_2$), or a combination of the $(NH_4)_2Ca(SO_4)_2$, and the $(NH_4)_2Mg(SO_4)_2$. Methods of making and using the fertilizer are also disclosed.

**FIG. 1**

EP 4 317 119 A1

(52) Cooperative Patent Classification (CPC): (Cont.)

C-Sets
**C05B 1/00, C05B 7/00;**
**C05B 7/00, C05B 9/00;**
**C05C 3/00, C05D 3/02;**
**C05C 3/00, C05D 5/00**

**Description**

**BACKGROUND OF THE INVENTION**

**I. Field of the Disclosure**

This disclosure generally concerns fertilizer compositions containing a slow-release agent. In particular embodiments, the disclosure concerns fertilizers containing calcium ammonium phosphate and/or magnesium ammonium phosphate, and a mixture of calcium sulfate and ammonium sulfate and/or a mixture of magnesium sulfate and ammonium sulfate.

**II. Background**

Soil nutrients, such as nitrogen, phosphorus, potassium, and sulfur, as well as trace elements such as iron, zinc, copper, and magnesium, are useful for achieving thriving agriculture and growth of plants. Upon repeated planting cycles, the quantity of these nutrients in the soil may be depleted, resulting in inhibited plant growth and decreased production. To counter this effect, fertilizers have been developed to help replace the depleted vital nutrients. Single-nutrient fertilizers and multi-nutrient fertilizers, such as fertilizer blends, have been developed to meet the varied needs of crop production worldwide.

Application of a fertilizer does not always provide the full amount of the nutrients in the fertilizer to the plant within a short period of time. Some fertilizers contain nutrient containing compounds that are not readily available to the plant upon application. In these circumstances, some apply fertilizer well before the planting of plants, or some over fertilize closer to the planting of the plants to provide sufficient nutrients to the plant initially. However, this comes at the cost of time, may require multiple treatments to the soil before or after planting, and/or increases expenses.

Plants, such as crop plants, need nutrients at least over the entire growth and maturation period for the plant. However, many fertilizers when applied to a soil disperse, are degraded, or are taken up within a short period of time after application. To address this issue, fertilizers can be applied multiple times to the same plants or slow release fertilizers can be used. Some approaches to slow release fertilizers include polymer coating a fertilizer core. Though, many polymer coatings are expensive and/or will undesirably build up in the soil over time after repeated applications. Some approaches to slow release fertilizers include coating or mixing with insoluble metal oxides, such as MgO and CaO. However, these metal oxides do not provide much, if any, nutrients to the plant.

**SUMMARY OF THE INVENTION**

A solution to at least some of the problems discussed above is disclosed herein, including generating a fertilizer product without urea and generating a fertilizer product that has slow-release characteristics for its nutrients. In some aspects, the component(s) build up in soil as a reservoir of nutrients for release over a time. In one aspect, the solution resides in providing a fertilizer comprising calcium (Ca) and/or magnesium (Mg), nitrogen (N) present as ammonium, sulfur (S) present as sulfate, and phosphorus (P) present as phosphate. In some aspects, the fertilizer contains at least one metal ammonium phosphate compound, at least one metal sulfate compound, and ammonium sulfate. The metal ammonium phosphate compound may act as a binder for the other components in the fertilizer, such as the metal sulfate and/or ammonium sulfate. In some embodiments, synthesis of at least part of the fertilizer occurs through reacting a metal oxide and/or metal carbonate, such as calcium oxide (CaO), magnesium oxide (MgO), magnesium carbonate ($MgCO_3$), calcium carbonate ($CaCO_3$), and/or dolomite, with sulfuric acid ($H_2SO_4$) and phosphoric acid ($H_3PO_4$). Non-limiting example reactions can include the following:

$$CaCO_3 + H_3PO_4 + 2H_2SO_4 \rightarrow CaHPO_4 + Ca(HSO_4)_2 + 2\ H_2O + 2\ CO_2$$

$$MgCO_3 + H_3PO_4 + 2H_2SO_4 \rightarrow MgHPO_4 + Mg(HSO_4)_2 + 2\ H_2O + 2\ CO_2$$

In some embodiments, synthesis of at least part of the fertilizer occurs through reacting a metal hydrogen phosphoric compound, such as $CaHPO_4$ and/or $MgHPO_4$, and an ammonia source, such as ammonium hydroxide ($NH_4OH$) and/or ammonia, to produce a metal ammonium phosphate, such as $CaNH_4PO_4$ and/or $MgNH_4PO_4$. Non-limiting example reactions can include the following:

$$CaHPO_4 + NH_3 \rightarrow CaNH_4PO_4$$

$$MgHPO_4 + NH_3 \rightarrow MgNH_4PO_4$$

In some embodiments, synthesis of at least part of the fertilizer occurs through reacting a metal hydrogen sulfuric compound, such as $Ca(HSO_4)_2$ and/or $Mg(HSO_4)_2$, and an ammonia source, such as ammonium hydroxide ($NH_4OH$) and/or ammonia, to produce a mixture of calcium sulfate ($CaSO_4$) and ammonium sulfate (($NH_4)_2SO_4$) (($NH_4)_2Ca(SO_4)_2$) and/or a mixture of magnesium sulfate ($MgSO_4$) and ammonium sulfate (($NH_4)_2SO_4$) (($NH_4)_2Mg(SO_4)_2$). Non-limiting example reactions can include the following:

$$Ca(HSO_4)_2 + NH_3 \rightarrow (NH_4)_2Ca(SO_4)_2$$

$$Mg(HSO_4)_2 + NH_3 \rightarrow (NH_4)_2Mg(SO_4)_2$$

The final product may contain a mixture of the above composition chemicals, including, but not limited to any one of the complexes $CaNH_4PO_4/(NH_4)_2Ca(SO_4)_2$, $MgNH_4PO_4/(NH_4)_2Mg(SO_4)_2$, or $CaNH_4PO_4/(NH_4)_2Ca(SO_4)_2/MgNH_4PO_4/(NH_4)_2Mg(SO_4)_2$.

In some aspects, chemical compositions and reactions to produce the chemical compositions of the fertilizer can be described by the formulas of Table 1.

**Table 1**

| Starting material | Product after reaction of starting material with the phosphoric acid and sulfuric acid | Product after reaction of step 1 material with the $NH_3$ |
|---|---|---|
| Steps | 1 | 2 |
| $CaCO_3$ | $CaHPO_4$, $Ca(HSO_4)_2$ | $CaNH_4PO_4$, $(NH_4)_2Ca(SO_4)_2$ |
| $MgCO_3$ | $MgHPO_4$, $Mg(HSO_4)_2$ | $MgNH_4PO_4$, $(NH_4)_2Mg(SO_4)_2$ |
| $CaCO_3$/ $MgCO_3$ (dolomite) | $CaHPO_4$, $MgHPO_4$, $Ca(HSO_4)_2$, $Mg(HSO_4)_2$ | $CaNH_4PO_4$, $MgNH_4PO_4$, $(NH_4)_2Ca(SO_4)_2$, $(NH_4)_2Mg(SO_4)_2$ |

Embodiments of the disclosure are improvements to known fertilizer, including by involving the use of a slow-release agent in a fertilizer comprising nitrogen (N), phosphorus (P), sulfur (S), and a metal such as calcium (Ca) or magnesium (Mg). Current slow-release fertilizer products often use physical intervention to slow the release of the fertilizer, such as by coating the fertilizer with a polymer insoluble material to slow the fertilizer's release. Current slow-release fertilizers may also employ enzymatic inhibitors, such as urease inhibitors or nitrification inhibitors, to slow the utilization of the fertilizer. Though the fertilizers described herein may also contain physical interventions and/or inhibitors, the fertilizers described herein do not always require such measures to produce a slow-release nutrient fertilizer composition.

Embodiments herein describe mixtures of nutrients, and the preparation of such mixtures, which play a role for generating a buildup of fertilizer in soil as reservoir of nutrients for release over time. The fertilizer can include an immediate-release aspect of the fertilizer that can comprise or consist of any soluble salts selected from group consisting of $MgSO_4$, $CaSO_4$, $K_3PO_4$, $CaCl_2$, $KCl$, $NiSO_4$, $ZnSO_4$, $FeCl_2$, $FeSO_4$, and any combination thereof. The slow-release aspect of the fertilizer can comprise or consist of one or more double salts, such as calcium ammonium phosphate and magnesium ammonium phosphate, including at any ratio. In some instances the slow-release aspect of the fertilizer can also comprise non-soluble oxides or salts, including those comprising Mg, Ca, Fe, Zn, Ni. The non-soluble salts can comprise or consist of simple salts, such as $MgCO_3$, $CaCO_3$, $FeCO_3$ or a combination of these salts.

In some aspects, the fertilizer comprises or consists of a blend of calcium ammonium phosphate and a mixture of calcium sulfate and ammonium sulfate. In some aspects, the fertilizer comprises or consists of a blend of magnesium ammonium phosphate and a mixture of magnesium sulfate and ammonium sulfate. In some aspects, the fertilizer comprises or consists of a blend of calcium ammonium phosphate, calcium sulfate, magnesium ammonium phosphate, magnesium sulfate, and ammonium sulfate.

Fertilizers encompassed in certain embodiments herein comprise ingredients that can be used to cover immediate soil Mg, Ca, N, and S deficiency in the form of an easily soluble calcium sulfate, magnesium sulfate, and/or ammonium sulfate, while also covering long-term Mg, Ca, N, and P needs through a slow release of $CaNH_4PO_4$ or $MgNH_4PO_4$.

Certain aspects are directed to a fertilizer comprising a homogenous mixture comprising a nitrogen source, a phosphorus source, a sulfur source, and one or both of a calcium source and a magnesium source. The homogenous mixture, in some aspects, comprises a binder. The binder can comprise a slow-release agent. The slow-release agent can comprise calcium ammonium phosphate ($CaNH_4PO_4$), magnesium ammonium phosphate ($MgNH_4PO_4$), or a com-

bination of $CaNH_4PO_4$ and $MgNH_4PO_4$. The homogenous mixture, in some aspects, comprises an immediate-release agent. The immediate-release agent can comprise ammonium sulfate and one or both of calcium sulfate and magnesium sulfate.

Certain aspects are directed to a fertilizer comprising at least a portion of the $(NH_4)_2Ca(SO_4)_2$ and/or a portion of the $(NH_4)_2Mg(SO_4)_2$ encapsulated by the calcium ammonium phosphate and/or magnesium ammonium phosphate. Certain aspects are directed to a fertilizer comprising at least a portion of the $(NH_4)_2Ca(SO_4)_2$ and/or a portion of the $(NH_4)_2Mg(SO_4)_2$ contained on the surface of the calcium ammonium phosphate and/or magnesium ammonium phosphate. Certain aspects are directed to a fertilizer comprising at least a portion of the $(NH_4)_2Ca(SO_4)_2$ and/or a portion of the $(NH_4)_2Mg(SO_4)_2$ contained in a dried gel of calcium ammonium phosphate and/or magnesium ammonium phosphate.

In some aspects, the slow-release agent further comprises magnesium oxide (MgO), calcium oxide (CaO), zinc oxide (ZnO), nickel oxide (NiO), magnesium carbonate ($MgCO_3$), calcium carbonate, ($CaCO_3$), iron (II) carbonate ($FeCO_3$), dolomite, or a combination thereof.

In some aspects, the immediate-release agent comprises or consists of $CaSO_4$, $MgSO_4$, and/or $(NH_4)_2SO_4$. In some aspects, the fertilizer does not comprise a binding agent separate from the calcium ammonium phosphate ($CaNH_4PO_4$), magnesium ammonium phosphate ($MgNH_4PO_4$), or a combination of $CaNH_4PO_4$ and $MgNH_4PO_4$. The fertilizer can be a granular fertilizer. In some aspects, the fertilizer comprises dolomite.

In certain aspects, the fertilizer contains at least any one of, at most any one of, equal to any one of, or between any two of 10, 11, 12, 13, 14, 15, 16, or 17 wt.% nitrogen (N), at least any one of, at most any one of, equal to any one of, or between any two of 11, 12, 13, 14, 15, 16, 17, or 18 wt.% potassium (P) in an amount equivalent $P_2O_5$, and at least any one of, at most any one of, equal to any one of, or between any two of 10, 11, 12, 13, 14, 15, or 16 wt.% sulfur (S). In certain aspects, the fertilizer contains at least any one of, at most any one of, equal to any one of, or between any two of 5, 6, 7, 8, 9, or 10 wt.% calcium (Ca) and at least any one of, at most any one of, equal to any one of, or between any two of 5, 6, 7, 8, 9, or 10 wt.% magnesium (Mg). In some instances, the immediate-release agent and the slow-release agent are comprised at a weight ratio between approximately 3:1 to 1:5, such as 3:1, 2:1, 1;1, 1:2, 1:3, 1:4, or 1:5.

In certain aspects, at least a portion of the $(NH_4)_2Ca(SO_4)_2$ is in the form of a hexahydrate and/or at least a portion of the $(NH_4)_2Mg(SO_4)_2$ is in the form of a hexahydrate. In certain aspects, the fertilizer does not contain ammonium nitrate, urea, and/or a polymer. In certain aspects, the fertilizer further comprises ammonium nitrate, urea, and/or a polymer.

Certain aspects are directed to a method of making a fertilizer, including any fertilizer described herein. The method can include steps (a) and/or (b). In step (a), CaO, MgO, $MgCO_3$, $CaCO_3$, and/or dolomite can be contacted with phosphoric acid ($H_3PO_4$) and sulfuric acid ($H_2SO_4$) to generate a first reaction product comprising: calcium hydrogen phosphate ($CaHPO_4$) and/or magnesium hydrogen phosphate ($MgHPO_4$); and calcium hydrogen sulfate ($Ca(HSO_4)_2$) and/or magnesium hydrogen sulfate ($Mg(HSO_4)_2$). In step (b), the first reaction product can be contacted with an ammonia source, such as ammonium hydroxide ($NH_4OH$) and/or ammonia ($NH_3$), to generate a second reaction product comprising: calcium ammonium phosphate ($CaNH_4PO_4$) and/or magnesium ammonium phosphate ($MgNH_4PO_4$); and a mixture of calcium sulfate and ammonium sulfate ($(NH_4)_2Ca(SO_4)_2$) and/or a mixture of magnesium sulfate and ammonium sulfate ($(NH_4)_2Mg(SO_4)_2$). In certain aspects, the method of making the fertilizer comprises drying the fertilizer mixture to form a solid fertilizer composition. Steps (a), (b), (c), and/or drying may occur at approximately 55°C to 150°C, such as 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 101, 102, 103, 104, 105, 106, 107, 108, 109, 110, 111, 112, 113, 114, 115, 116, 117, 118, 119, 120, 121, 122, 123, 124, 125, 126, 127, 128, 129, 130, 131, 132, 133, 134, 135, 136, 137, 138, 139, 140, 141, 142, 143, 144, 145, 146, 147, 148, 149, and 150 °C. In some aspects, steps (a) and/or (b) may occur at 55 to 75 °C or any temperature or range therein. In some aspects, the fertilizer composition comprises or consists of: calcium ammonium phosphate ($CaNH_4PO_4$), magnesium ammonium phosphate ($MgNH_4PO_4$), or a combination of $CaNH_4PO_4$ and $MgNH_4PO_4$; and a mixture of calcium sulfate and ammonium sulfate ($(NH_4)_2Ca(SO_4)_2$), a mixture of magnesium sulfate and ammonium sulfate ($(NH_4)_2Mg(SO_4)_2$), or a combination of the $(NH_4)_2Ca(SO_4)_2$, and the $(NH_4)_2Mg(SO_4)_2$. In some aspects, the ammonia source comprises a solution of ammonium hydroxide, ammonium, ammonium carbonate, ammonia gas, succinimide, and/or phthalimide.

Also disclosed are the following Aspects 1 to 40 of the present invention.

Aspect 1 is a fertilizer composition comprising: calcium ammonium phosphate ($CaNH_4PO_4$), magnesium ammonium phosphate ($MgNH_4PO_4$), or a combination of $CaNH_4PO_4$ and $MgNH_4PO_4$; and a mixture of calcium sulfate and ammonium sulfate ($(NH_4)_2Ca(SO_4)_2$), a mixture of magnesium sulfate and ammonium sulfate ($(NH_4)_2Mg(SO_4)_2$), or a combination of the $(NH_4)_2Ca(SO_4)_2$, and the $(NH_4)_2Mg(SO_4)_2$.

Aspect 2 is the fertilizer composition of aspect 1, wherein the composition comprises 10 to 17 wt.% nitrogen (N), potassium (P) in an amount equivalent to 11 to 18 wt.% $P_2O_5$, and 10 to 16 wt.% sulfur (S).

Aspect 3 is the fertilizer composition of any one of aspects 1 and 2, wherein the composition comprises 5 to 10 wt.% calcium (Ca) and 5 to 10 wt.% magnesium (Mg).

Aspect 4 is the fertilizer composition of any one of aspects 1 to 3, wherein the composition further comprises a calcium phosphate, a magnesium phosphate, and/or ammonium phosphate ($(NH_4)_3PO_4$).

Aspect 5 is the fertilizer composition of aspect 4, wherein the composition comprises calcium sulfate ($CaSO_4$) comprised in waste gypsum and/or a recycled gypsum.

Aspect 6 is the fertilizer composition of any one of aspects 1 to 5, wherein the composition further comprises magnesium oxide (MgO), calcium oxide (CaO), zinc oxide (ZnO), nickel oxide (NiO), magnesium carbonate ($MgCO_3$), calcium carbonate, ($CaCO_3$), iron (II) carbonate ($FeCO_3$), or a combination thereof.

Aspect 7 is the fertilizer composition of any one of aspects 1 to 6, wherein the composition further comprises nickel sulfate ($NiSO_4$), zinc sulfate ($ZnSO_4$), iron (II) sulfate ($FeSO_4$), or a combination thereof.

Aspect 8 is the fertilizer composition of any one of aspects 1 to 7, further comprising iron (II) phosphate ($FePO_4$) and/or dolomite.

Aspect 9 is the fertilizer composition of any one of aspects 1 to 8, wherein the composition does not comprise a binding agent separate from the calcium ammonium phosphate ($CaNH_4PO_4$), magnesium ammonium phosphate ($MgNH_4PO_4$), $(NH_4)_2Ca(SO_4)_2$, or $(NH_4)_2Mg(SO_4)_2$.

Aspect 10 is the fertilizer composition of any one of aspects 1 to 9, wherein the $(NH_4)_2Ca(SO_4)_2$ comprises calcium ammonium sulfate hexahydrate and/or the $(NH_4)_2Mg(SO_4)_2$ comprises magnesium ammonium sulfate hexahydrate.

Aspect 11 is the fertilizer composition of any one of aspects 1 to 10, wherein at least a portion of the ammonium sulfate is absorbed on the surface of the calcium ammonium phosphate and/or magnesium ammonium phosphate.

Aspect 12 is the fertilizer composition of any one of aspects 1 to 11, wherein the composition comprises a combination of $CaNH_4PO_4$ and $MgNH_4PO_4$.

Aspect 13 is the fertilizer composition of any one of aspects 1 to 12, wherein the composition comprises a combination of $(NH_4)_2Ca(SO_4)_2$ and $(NH_4)_2Mg(SO_4)_2$.

Aspect 14 is the fertilizer composition of any one of aspects 1 to 13, wherein the fertilizer composition comprises a nitrogen source, a phosphorus source, and a potassium source.

Aspect 15 is the fertilizer composition of any one of aspects 1 to 14, wherein the fertilizer is homogenous.

Aspect 16 is the fertilizer composition of any one of aspects 1 to 15, wherein the composition comprises a gel.

Aspect 17 is the fertilizer composition of any one of aspects 1 to 15, wherein the composition comprises a dried gel.

Aspect 18 is the fertilizer composition of any one of aspects 1 to 17, wherein at least a portion of the $(NH_4)_2Ca(SO_4)_2$ and/or a portion of the $(NH_4)_2Mg(SO_4)_2$ is encapsulated by the calcium ammonium phosphate and/or magnesium ammonium phosphate.

Aspect 19 is the fertilizer composition of any one of aspects 1 to 18, wherein the fertilizer composition is a granular fertilizer.

Aspect 20 is the fertilizer composition of any one of aspects 1 to 19, wherein the composition does not comprise an ammonium nitrate.

Aspect 21 is the fertilizer composition of any one of aspects 1 to 20, wherein the composition does not comprise urea.

Aspect 22 is the fertilizer composition of any one of aspects 1 to 21, wherein the composition does not comprise a polymer.

Aspect 23 is a method of producing a fertilizer composition, the method comprising the steps of: (a) contacting CaO, MgO, $MgCO_3$, $CaCO_3$, and/or dolomite with phosphoric acid ($H_3PO_4$) and sulfuric acid ($H_2SO_4$) to generate a first reaction product comprising: calcium hydrogen phosphate ($CaHPO_4$) and/or magnesium hydrogen phosphate ($MgHPO_4$); and calcium hydrogen sulfate ($Ca(HSO_4)_2$) and/or magnesium hydrogen sulfate ($Mg(HSO_4)_2$); (b) contacting the first reaction product with a source of ammonia to generate a second reaction product comprising: calcium ammonium phosphate ($CaNH_4PO_4$) and/or magnesium ammonium phosphate ($MgNH_4PO_4$); and a mixture of calcium sulfate and ammonium sulfate ($(NH_4)_2Ca(SO_4)_2$) and/or a mixture of magnesium sulfate and ammonium sulfate ($(NH_4)_2Mg(SO_4)_2$).

Aspect 24 is the method of aspect 23, further comprising drying the second reaction product to form a solid fertilizer composition.

Aspect 25 is the method of any one of aspects 23 and 24, further comprising: (c) combining the second reaction product and $CaSO_4$.

Aspect 26 is the method of aspect 25, wherein the combining step (c) comprises combining the second reaction product with $CaSO_4$ at a weight ratio of approximately 3:1 to 1:3.

Aspect 27 is the method of any one of aspects 25 and 26, wherein the $CaSO_4$ comprises red gypsum and/or waste gypsum from production of $H_3PO_4$.

Aspect 28 is the method of any one of aspects 23 to 27, wherein steps (a) and/or (b) occurs at 55 to 75 °C.

Aspect 29 is the method of any one of aspects 23 to 28, wherein the source of ammonia is ammonium hydroxide ($NH_4OH$) and/or ammonia ($NH_3$).

Aspect 30 is the method of any one of aspects 23 to 29, wherein in step (a) dolomite contacts phosphoric acid ($H_3PO_4$) and sulfuric acid ($H_2SO_4$).

Aspect 31 is the method of any one of aspects 23 to 29, wherein in step (a) $MgCO_3$ and $CaCO_3$ contacts phosphoric acid ($H_3PO_4$) and sulfuric acid ($H_2SO_4$).

Aspect 32 is the method of any one of aspects 23 to 31, wherein a stoichiometric excess of phosphoric acid ($H_3PO_4$) and sulfuric acid ($H_2SO_4$) needed to form the calcium hydrogen phosphate ($CaHPO_4$) and/or magnesium hydrogen phosphate ($MgHPO_4$) and calcium hydrogen sulfate ($Ca(HSO_4)_2$) and/or magnesium hydrogen sulfate ($Mg(HSO_4)_2$) is present in step (a).

Aspect 33 is the method of aspect 32, wherein at least a portion of the stoichiometric excess of phosphoric acid ($H_3PO_4$) and sulfuric acid ($H_2SO_4$) contacts the source of ammonia of step (b) to form ammonium phosphate ($(NH_4)_3PO_4$) and/or ammonium sulfate ($(NH_4)_2SO_4$).

Aspect 34 is the method of any one of aspect 23 to 33, wherein the weight ratio of phosphoric acid ($H_3PO_4$) and sulfuric acid ($H_2SO_4$) to CaO, MgO, $MgCO_3$, $CaCO_3$, and/or dolomite is 1:1 to 3:1.

Aspect 35 is the method of any one of aspects 23 to 34, wherein the fertilizer composition is any one of the fertilizer compositions of aspects 1 to 22.

Aspect 36 is a method of fertilizing, the method comprising contacting a plant, a soil, water, or a combination thereof with the fertilizer compositions of any one of aspects 1 to 22.

Aspect 37 is a method of increasing pH of a soil, the method comprising contacting a soil with the fertilizer compositions of any one of aspects 1 to 22.

Aspect 38 is the method of aspect 37, wherein the pH of the soil contacted is a pH less than 6.

Aspect 39 is the method of any one of aspects 37 and 38, wherein the pH of the soil is increased to a pH of 6 or greater.

Aspect 40 is the method of any one of aspects 37 to 39, wherein the pH of the soil contacted is a pH of 3 to 4 and the pH of the soil is increased to a pH of 6 to 8.

The term "fertilizer" is defined as a material applied to soils or to plant tissues to supply one or more plant nutrients essential or beneficial to the growth of plants and/or stimulants or enhancers to increase or enhance plant growth.

The term "granule" can include a solid material. A granule can have a variety of different shapes, non-limiting examples of which include a spherical, a puck, an oval, a rod, an oblong, or a random shape.

The term "particle" can include a solid material less than a millimeter in its largest dimension.

The terms "particulate" or "powder" can include a plurality of particles.

The terms "about" or "approximately" as used herein are defined as being close to as understood by one of ordinary skill in the art. In one non-limiting embodiment, the terms are defined to be within 10%, preferably within 5%, more preferably within 1%, and most preferably within 0.5%.

The terms "wt. %," "vol.%," or "mol.%" refers to a weight, volume, or molar percentage of a component, respectively, based on the total weight, the total volume of material, or total moles, that includes the component. In a non-limiting example, 10 grams of component in 100 grams of the material is 10 wt. % of component.

The use of the word "a" or "an" when used in conjunction with the term "comprising" may mean "one," but it is also consistent with the meaning of "one or more," "at least one," and "one or more than one."

The phrase "and/or" means "and" or "or". To illustrate, A, B, and/or C includes: A alone, B alone, C alone, a combination of A and B, a combination of A and C, a combination of B and C, or a combination of A, B, and C. In other words, "and/or" operates as an inclusive or.

The words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

The compositions and methods for their use can "comprise," "consist essentially of," or "consist of' any of the ingredients or steps disclosed throughout the specification. Compositions and methods "consisting essentially of' any of the ingredients or steps disclosed limits the scope of the claim to the specified materials or steps which do not materially affect the basic and novel characteristic of the claimed invention.

It is contemplated that any embodiment discussed in this specification can be implemented with respect to any method or composition of the invention, and vice versa. Furthermore, compositions of the invention can be used to achieve methods of the invention.

Other objects, features and advantages of the present invention will become apparent from the following detailed description. It should be understood, however, that the detailed description and the specific examples, while indicating specific embodiments of the invention, are given by way of illustration only, since various changes and modifications within the spirit and scope of the invention will become apparent to those skilled in the art from this detailed description.

**BRIEF DESCRIPTION OF THE DRAWINGS**

The following drawings form part of the present specification and are included to further demonstrate certain aspects of the present invention. The invention may be better understood by reference to one or more of these drawings in combination with the detailed description of specific embodiments presented herein.

FIG. 1: a schematic of a system and method for producing a fertilizer according to a non-limiting example of a system and method disclosed herein.
FIG. 2: a schematic of a system and method for producing a fertilizer according to another non-limiting example of a system and method disclosed herein.

**DETAILED DESCRIPTION OF THE INVENTION**

Certain aspects of the present disclosure provide benefits over existing fertilizers, including by having slow-release characteristics for nutrients comprising the fertilizer. Certain aspects provided herein allow for the fertilizer slowly release nutrients into the soil over a period of time, such as throughout a growing cycle for a plant. This capability can be achieved, in some aspects, without the use of binders, inhibitors, or other interventions that add compounds beyond the fertilizer's nutrients. In some embodiments, the fertilizer comprises a double salt, such as a metal ammonium phosphate, such as calcium ammonium phosphate ($CaNH_4PO_4$), magnesium ammonium phosphate ($MgNH_4PO_4$), or a combination of $CaNH_4PO_4$ and $MgNH_4PO_4$; a mixture of calcium sulfate and ammonium sulfate ($(NH_4)_2Ca(SO_4)_2$), a mixture of magnesium sulfate and ammonium sulfate ($(NH_4)_2Mg(SO_4)_2$), or a combination of the $(NH_4)_2Ca(SO_4)_2$, and the $(NH_4)_2Mg(SO_4)_2$.which may be one chemical composition and/or one homogenous mixture. The metal ammonium phosphate compound may act as a binder for the other components in the fertilizer

**I. Fertilizer**

Certain embodiments herein concern a complex fertilizer comprising: a double salt, such as a metal ammonium phosphate, which may comprise $CaNH_4SO_4$ and/or $MgNH_4SO_4$; and a mixture of calcium sulfate and ammonium sulfate ($(NH_4)_2Ca(SO_4)_2$) and/or a mixture of magnesium sulfate and ammonium sulfate ($(NH_4)_2Mg(SO_4)_2$). Certain aspects involve synthesis of the nutrient complex using natural sources of ingredients of the fertilizer, such as CaO, MgO, $MgCO_3$, $CaCO_3$, $H_3PO_4$, $H_2SO_4$, $NH_3$, and $NH_4OH$. In some aspects, complex fertilizer is a mixture that is a homogeneous mixture
The fertilizer, which may be a fertilizer granule, can contain a mixture containing calcium (Ca), magnesium (Mg), phosphorus (P), nitrogen (N) present as ammonium, sulfur (S) present as sulfate. The ratio of elements present in the fertilizer may be tailored to specific applications.
At least a portion of Ca can be present as calcium ammonium phosphate and/or calcium sulfate. In some aspects, at least 90 wt. %, or at least 95 wt. %, or 90 wt. % to 100 wt. %, or at least any one of, at most any one of, equal to any one of, or between any two of 90, 91, 92, 93, 94, 95, 96, 97, 98, 99, 99.5, and 100 wt. % of the Ca in the mixture can be present as calcium ammonium phosphate and/or calcium sulfate, based on the total weight of Ca in the mixture. In some embodiments, at least any one of, at most any one of, equal to any one of, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 99.5, and 100 wt. % of the Ca in the mixture can be present as calcium ammonium phosphate. In some embodiments, at least any one of, at most any one of, equal to any one of, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 99.5, and 100 wt. % of the Ca in the mixture can be present as calcium sulfate.
At least a portion of Mg can be present as magnesium ammonium phosphate and/or magnesium sulfate. In some aspects, at least 90 wt. %, or at least 95 wt. %, or 90 wt. % to 100 wt. %, or at least any one of, at most any one of, equal to any one of, or between any two of 90, 91, 92, 93, 94, 95, 96, 97, 98, 99, 99.5, and 100 wt. % of the Mg in the mixture can be present as magnesium ammonium phosphate and/or magnesium sulfate, based on the total weight of Mg in the mixture. In some embodiments, at least any one of, at most any one of, equal to any one of, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 99.5, and 100 wt. % of the Mg in the mixture can be present as magnesium ammonium phosphate. In some embodiments, at least any one of, at most any one of, equal to any one of, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 99.5, and 100 wt. % of the Mg in the mixture can be present as magnesium sulfate.

In some aspects, the mixture can contain i) $CaNH_4SO_4$ in an amount providing at least any one of, at most any one of, equal to any one of, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 99.5, and 100 wt. % based on the total weight of the mixture and/or the fertilizer granule; ii) $MgNH_4SO_4$ in an amount providing at least any one of, at most any one of, equal to any one of, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 99.5, and 100 wt. % based on the total weight of the mixture and/or the fertilizer granule; iii) $CaSO_4$ in an amount providing at least any one of, at most any one of, equal to any one of, or between any two of 0, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, and 99 wt. % based on the total weight of the mixture and/or the fertilizer granule; iv) $MgSO_4$ in an amount providing at least any one of, at most any one of, equal to any one of, or between any two of 0, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, and 99 wt. % based on the total weight of the mixture and/or the fertilizer granule; and v) $(NH_4)_2SO_4$ in an amount providing at least any one of, at most any one of, equal to any one of, or between any two of 0, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, and 99 wt. % based on the total weight of the mixture and/or the fertilizer granule.

In some aspects, the homogenous mixture comprises Ca, Mg, N, P, and/or S wherein i) the Ca content of the homogenous mixture can be at least any one of, at most any one of, equal to any one of, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 99.5, and 100 wt. %, ii) the Mg content of the homogenous mixture can be at least any one of, at most any one of, equal to any one of, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 99.5, and 100 wt. %, iii) the N content of the homogenous mixture can be at least any one of, at most any one of, equal to any one of, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 99.5, and 100 wt. %, iv) the P content of the homogenous mixture can be at least any one of, at most any one of, equal to any one of, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 99.5, and 100 wt. %, and v) the S content of the homogenous mixture can be at least any one of, at most any one of, equal to any one of, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 99.5, and 100 wt. %, based on the total weight of the mixture and/or fertilizer.

The Ca, Mg, N, P, and/or S can be present as and/or sourced as a water soluble compound or a water insoluble compound. In some instances, the Ca, Mg, N, P, and/or S can be present as a salt. In some aspects, the Ca, Mg, N, P, and/or S can be present as a water soluble salt. In some instances, the water soluble Ca salt can be $CaSO_4$. In some instances, the water soluble Mg salt can be $MgSO_4$. The Ca, Mg, N, P, and/or S salt can be in a non-hydrate and/or one or more hydrate form.

Moisture content of the dried fertilizer can be less than 1 wt. %, such as 0.1 wt. % to 0.9 wt. %, or any one of or between any two of 0.1, 0.2, 0.3, 0.4, 0.5, 0.6, 0.7, 0.8, 0.9, or 1 wt. %, or any range thereof, based on the weight of the fertilizer granule. As a non-limiting example, the moisture content can be measured by drying the sample at 50°C, for 25 min and measuring the amount of mass lost by the fertilizer after being dried.

The fertilizer can be of any suitable shape. Non-limiting shapes include spherical, cuboidal, cylindrical, puck shape, oval, and oblong shapes. In some aspects, the fertilizer granule can be of cylindrical shape with a circular, elliptical, ovular, triangular, square, rectangular, pentagonal, or hexagonal cross section, although cylindrical shaped core having a cross-section of other shapes can also be made. In some aspects, the fertilizer granule at its widest dimension can be 0.5 mm to 6 mm, or 0.5 mm to 5 mm, preferably 1 mm to 4 mm, or at least any one of, at most any one of, equal to any one of, or between any two of 0.5 mm, 1 mm, 1.5 mm, 2 mm, 2.5 mm, 3 mm, 3.5 mm, 4 mm, 4.5 mm, 5 mm, 5.5 mm, and 6 mm. In some particular aspects, the fertilizer granule can have a substantially spherical shape with an average diameter 0.5 mm to 6 mm, or 0.5 mm to 5 mm, preferably 1 mm to 4 mm, or at least any one of, at most any one of, equal to any one of, or between any two of 0.5 mm, 1 mm, 1.5 mm, 2 mm, 2.5 mm, 3 mm, 3.5 mm, 4 mm, 4.5 mm, 5 mm, 5.5 mm, and 6 mm.

The fertilizer can be water and/or soil dispersible. In some aspects, a fertilizer granule having a size of 2 mm to 4 mm prior to adding to water, can disintegrate into particles having sizes less than 1 mm, less than 0.9 mm, less than 0.8 mm, less than 0.7 mm, less than 0.6 mm, less than 0.5 mm, less than 0.4 mm, or less than 0.3 mm, within 1 minute of adding the granule to water at a pH 7, under stirring at a rate 90 rpm to 110 rpm, at an ambient temperature.

The mixture can have a compositional make-up that is substantially homogeneous. In some instances, a compositional make-up for a 1 mm × 1 mm × 1 mm cube at any position of the mixture can be similar (within ± 20 %, or ± 10 %, or ± 5 %, or ± 3 %, ± 2 %, or ± 1 %, or ± 0.5 %) to that of a 1 mm × 1 mm × 1 mm cube at any other position of the mixture.

In some aspects, the fertilizer granule can contain an homogeneous mixture. The homogeneous mixture can have compositions as described above. In some instances, the homogenous mixture can have an optional coating on the outer surface of the homogenous mixture. In some instances, the $CaNH_4PO_4$ and/or $MgNH_4PO_4$ can act as a binder in the fertilizer. In some instances the $CaNH_4PO_4$ and/or $MgNH_4PO_4$ is the only binder in the fertilizer. In some instances, the $CaNH_4PO_4$ and/or $MgNH_4PO_4$ form an amorphous phase, a continuous phase, and/or encapsulate other ingredients in the fertilizer. In some instances, the fertilizer comprises a matrix of $CaNH_4PO_4$ and/or $MgNH_4PO_4$ that at least partially surrounds and/or encapsulates at least a portion of the calcium sulfate, magnesium sulfate, and/or ammonium sulfate. In some instances, the fertilizer comprises particles of the slow-release agent(s) and/or of immediate-release agent(s).

In some aspects, additional fertilizer substances can be included or excluded in the fertilizer. If included, additional fertilizers can be chosen based on the particular needs of certain types of soil, climate, or other growing conditions to maximize the efficacy of the fertilizer in enhancing plant growth and crop yield. Additional additives may also be included or excluded in the fertilizer. Non-limiting examples of additives that can be included or excluded from the fertilizer of the present invention include additional nitrogen nutrients, additional phosphorus nutrients, additional potassium nutrients, additional micronutrients, and/or additional secondary nutrients. The micronutrient can be copper, iron, chloride, manganese, molybdenum, or nickel, or any combinations thereof. The nitrogen nutrient can be urea, ammonium nitrate, ammonium sulfate, diammonium phosphate, monoammonium phosphate, urea-formaldehyde, ammonium chloride, and potassium nitrate. In some aspects, the additional secondary nutrients may include lime and/or superphosphate. In some instances, the additional fertilizer substances and/or the additional additives are contained in the optional coating of the fertilizer.

In some instances, the inhibitors include nitrification inhibitors and/or urease inhibitors. Suitable nitrification inhibitors include, but are not limited to, 3,4-dimethylpyrazole phosphate (DMPP), dicyandiamide (DCD), thiourea (TU), 2-chloro-6-(trichloromethyl)-pyridine (Nitrapyrin), 5-ethoxy-3-trichloromethyl-1,2,4-thiadiazol, which is sold under the tradename Terrazole®, by OHP Inc., USA, 2-amino 4-chloro 6-methyl pyrimidine (AM), 2-mercaptobenzothiazole (MBT), or 2-sulfanilamidothiazole (ST), and any combination thereof. In one aspect, a nitrification inhibitor can comprise DMPP, DCD, TU, nitrapyrin, 5-ethoxy-3-trichloromethyl-1,2,4-thiadiazol, AM, MBT, or ST, or a combination thereof. In some embodiments, a fertilizer composition can comprise NBTPT, DMPP, TU, DCD, PPDA, nitrapyrin, 5-ethoxy-3-trichloromethyl-1,2,4-thiadiazol, AM, MBT, ST, or a combination thereof.

In some instances, a binder includes a phosphate, a polyphosphate, a biodegradable polymer, or a wax, or a combination thereof. Suitable waxes include, but are not limited to, vegetable waxes, high melt waxes, ethylene bis(stearamide) wax, paraffin waxes, polyethylene based waxes, and olefin waxes. Suitable phosphates include, but are not limited to, diammonium phosphate, and monoammonium phosphate. Suitable polyphosphates include, but are not limited to, ammonium polyphosphate. Suitable biodegradable polymers include, but are not limited to, polyacrylamide, polyacrylic acid, polyacrylonitrile, biodegradable polylactic acid and other biodegradable polymeric material such as polylactic acid, poly(3-hydroxypropionic acid), polyvinyl alcohol, poly e-caprolactone, poly L-lactide, poly butylene succinate, and biodegradable starch based polymers. The binder can include plaster of Paris, flour, starch, gluten, kaolin, bentonite, colloidal silica, or combinations thereof. Suitable flours include, but are not limited to, rice flour, wheat flour, and bleached wheat flour. Suitable starches include, but are not limited to, dextrin modified starches.

In some instances, the pH buffers include MgO, $KH_2PO_4$, $NaHCO_3$, chalk powder, aluminum, magnesium hydroxide, aluminum hydroxide/magnesium hydroxide co-precipitate, aluminum hydroxide/sodium bicarbonate co-precipitate, calcium acetate, calcium bicarbonate, calcium borate, calcium carbonate, calcium bicarbonate, calcium citrate, calcium gluconate, calcium hydroxide, dibasic sodium phosphate, dipotassium hydrogen phosphate, dipotassium phosphate, disodium hydrogen phosphate, magnesium acetate, magnesium borate, magnesium bicarbonate, magnesium carbonate, magnesium hydroxide, magnesium lactate, magnesium oxide, magnesium phosphate, magnesium silicate, magnesium succinate, magnesium tartrate, potassium acetate, potassium carbonate, potassium bicarbonate, potassium borate, potassium citrate, potassium metaphosphate, potassium phthalate, potassium phosphate, potassium polyphosphate, potassium pyrophosphate, potassium succinate, potassium tartrate, sodium acetate, sodium bicarbonate, sodium borate, sodium carbonate, sodium citrate, sodium gluconate, sodium hydrogen phosphate, sodium hydroxide, sodium lactate, sodium phthalate, sodium phosphate, sodium polyphosphate, sodium pyrophosphate, sodium tartrate, sodium tripolyphosphate, synthetic hydrotalcite, tetrapotassium pyrophosphate, tetrasodium pyrophosphate, tripotassium phosphate, trisodium phosphate, and trometamol, and combinations thereof.

The fertilizer escribed herein can be comprised in a composition useful for application to soil. In some aspects, in addition to the fertilizer described herein, the composition may include other fertilizer compounds, micronutrients, primary nutrients, urea, additional nitrogen nutrients, insecticides, herbicides, or fungicides, or combinations thereof. The fertilizer described herein can also be included in a blended composition comprising other fertilizers. The other fertilizer can be urea, mono ammonium phosphate (MAP), diammonium phosphate (DAP), muriate of potash (MOP), monopotassium phosphate (MKP), triple super phosphate (TSP), rock phosphate, single super phosphate (SSP), ammonium sulfate, and the like.

A fertilizer formed into a granule can have desirable physical properties such as desired levels of abrasion resistance, granule strength, pelletizability, hygroscopicity, granule shape, and size distribution. In some aspects, The fertilizer granule can have a crush strength above 1.5 kgf, such as above 1.8 kgf, such as 2 kgf to 6 kgf, or at least any one of, equal to any one of, or between any two of 2, 2.5, 3, 3.5, 4, 4.5, 5, 5.5, and 6 kgf. Bulk density of the fertilizer granules can be 1 g/cc to 1.2 g/cc, or at least any one of, at most any one of, equal to any one of, or between any two of 1, 1.02, 1.04, 1.06, 1.08, 1.1, 1.12, 1.14, 1.16, 1.18, and 1.2 g/cc. In some aspects, 10 mg or more, such as 10 mg to 40 mg, or at least any one of, at most any one of, equal to any one of, or between any two of 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, and 40 mg of the fertilizer granule can dissolve in 1 ml of water at a pH 7, under stirring at a rate 90 to 110 rpm, and at an ambient temperature, within 5 minutes of adding 100 mg of the fertilizer granules to the water. In some aspects, the fertilizer granule is capable of losing less than 0.13 wt. %, such as 0.02 % to 0.12 wt. %, or at most any one of, equal to any one of, or between any two of 0.02, 0.03, 0.04, 0.05, 0.06, 0.07, 0.08, 0.09, 0.1, 0.11, and 0.12 wt. % in an attrition loss test. Attrition loss can be measured using the following attrition loss test.

Attrition loss test: A plurality of sieved fertilizer granules with individual size 2 to 4 mm, and total volume 100 cm$^3$ is weighed (W1) and is placed into the test drum along with the 50 stainless steel balls having a total weight of 100 gm. The drum is closed and rotated for 10 min at 30 rpm. Then, the steel balls are separated from the sample and the material is screened over 2 mm sieve using a sieve shaker. The total weight of the granules over 2 mm are then re-weighed (W2). Results are calculated in terms of % weight loss using the formula:

$$\text{Weight loss due to attrition (wt. \%)} = \frac{\textit{weight of sample remained on 2 mm sieve ((W2))}}{\textit{intial weight of the sample (W1)}} \times 100$$

## II. Method of Making a Fertilizer

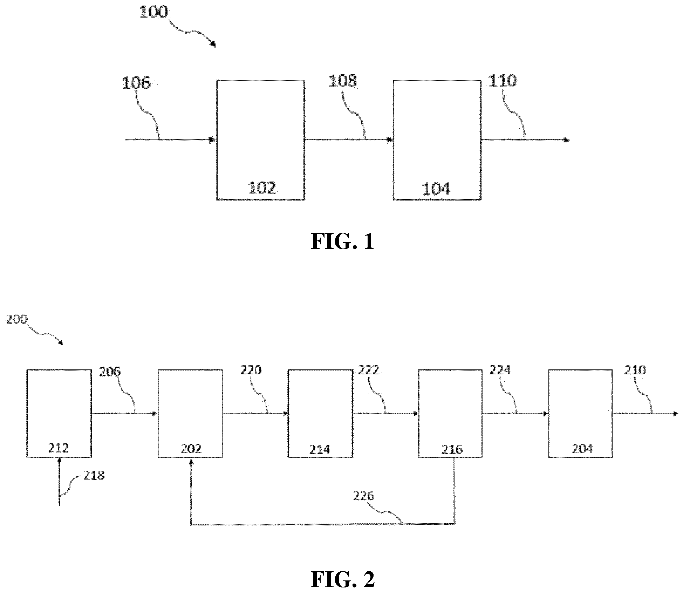

Referring to FIG. 1, a schematic of a system and method for making a fertilizer according to one example of the present invention is described. The system 100 can include a granulator 102 and a dryer 104. A feed mixture 106 can be granulated in the granulator 102 in the presence or absence of water to form a wet granulated mixture 108. The water, if present, can be provided with the feed mixture 106, and/or can be added separately to the granulator 102. The wet granulated mixture 108 can be dried in the dryer 104 to obtain dry granulated mixture 110 containing the fertilizer.

Referring to FIG. 2, a schematic of a system and method for making a fertilizer according to another example of the present invention is described. The system 200 can include a mixer/reactor 212, though the mixer and the reactor can be two, three, four, or more components, such as two reactors and a mixer or a reactor and a mixer. The system 200 can include a granulator 202, a spheronizer 214, one or more size screens 216, and a dryer 204, or any combination thereof. The feed mixture ingredients 218, separately and/or at any possible combination can be added to the mixer/reactor 212. In the mixer/reactor 212, the feed ingredients can be reacted and/or mixed to form the feed mixture 206. Feed mixture 206 can be granulated in the granulator 202 in presence or absence of additional water to form a wet granulated mixture 220. Granules of the wet granulated mixture 220 can be spheronized in the spheronizer 214 to form a wet granulated mixture 222 containing substantially spherical granules. The wet granulated mixture 222 can be passed through one or more size screens 216 to separate granules having a size smaller or bigger than a desired size from the wet granulated mixture 222 and obtain a wet granulated mixture 224 containing granules of desired size. At least a portion of the granules separated 226 from the granulation mixture 224 containing granules of desired size can be recycled to the granulator 202. The wet granulated mixture 224 containing granules of desired size can be dried in the dryer 204 to obtain dry granulated mixture 210 containing the fertilizer granule. In some aspects, the mixer/reactor 212 can contain a ribbon mixer.

The feed mixture ingredients 218 can include i) a Ca source, e.g., calcium carbonate, ii) a Mg source, e.g., magnesium carbonate, iii) a N source, e.g., $NH_4^+$ and/or $NH_3$, iv) a P source, e.g., phosphoric acid, and v) a S source, e.g., sulfuric acid. In some instances, a mixture ingredient provides more than one of Ca, Mg, N, P, and/or S. In some instances, a mixture ingredient provides additional nutrients and/or micronutrients, such as Fe and/or Si. In certain aspects, one or more ingredients can be added as a water solution. In some instances, the mixture ingredients are provided as a powder. In some instances, one or more ingredients can be added as a gas. In some instances, the $NH_3$ is provided at a pressure above 1 bar, such as at, or between, or of any range of 1.2, 1.3, 1.4, 1.5, 2, 2.5, 3, 3.5, 4, 4.5, 5, 5.5., 6, 6.5, 7, 7.5, 8, 9, 10, 15, 20, 25, 30, 35, and 40 bar. In some instances, a portion of the mixture ingredients are provided as a powder.

The feed mixture 106, 206 can contain Ca, Mg, N, P, and/or S. In some aspects, the feed mixture 106, 206 can contain i) a metal carbonate, ii) phosphoric acid, iii) ammonium hydroxide, iv) a metal oxide, v) $CaNH_4PO_4$, vi) $MgNH_4PO_4$, vii) sulfuric acid, viii) dolomite, ix) $MgHPO_4$, x) $CaHPO_4$, xi) $CaSO_4$, xii) $MgSO_4$, and/or xiii) $(NH_4)_2SO_4$.

Water can be added to the feed mixture in the mixer/reactor 212 and/or in the granulator 102, 202. In certain aspects, 5 gm to 20 gm, or at least any one of, at most any one of, equal to any one of, or between any two 5, 6, 7, 8, 9, 10, 11, 12, 13, 14, 15, 16, 17, 18, 19, and 20 gm of water in total (e.g., added with one or more feed mixture ingredients and/or separately) can be added to the feed mixture, per 100 gm of feed mixture.

In some aspects, the granulator 102, 202 can be a drum granulator, pugmill granulator, pan granulator, solid mixer, abrasion drum, extruder, high-shear mixer granulator, roller granulator, mycromix, or a round bottom flask. In the granulator 102, 202 the feed mixture 106, 206 can be granulated by agglomeration, spray granulation, compaction, slurry granulation and/or high-shear mixer granulation. In some particular aspect, the feed mixture 106, 206 can be granulated in the granulator 102, 202 by compaction. In some aspects, the granulator 102, 202 can contain at least two rollers and compaction granulation can include compressing the feed mixture using the at least two rollers. In some aspects, the two rollers can be moved in counter current direction during compaction. In some aspects, the feed mixture can be compressed into shaped pellets, such as cylindrical pellets, by the at least two rollers. In some aspects, a surface of one roller can have desired holes to compress the feed mixture into the holes, and the surface of the other roller can push the feed mixture into the holes. Pressure during granulation, e.g. compaction granulation can be 1 bar to 40 bar, or at least any one of, at most any one of, equal to any one of, or between any two 1, 2, 3, 4, 5, 10, 15, 20, 25, 30, 35, and 40 bar. In certain aspects, the feed mixture can be granulated in the granulator 102, 202 at ambient temperature to 50 °C, or at least any one of, at most any one of, equal to any one of, or between any two of -20, -15, -10, 0, 5, 10, 15, 20, 25, 30, 35, 40, 45 and 50 °C.

In some aspects, reacting of the feed mixture ingredients, mixing, and granulating the feed mixture can be performed in different containers, e.g., the mixer/reactor 212 and the granulator 202 can be different containers. In some aspects, reacting of the feed mixture ingredients, mixing, and granulating the feed mixture can be performed in the same container, e.g., the mixer/reactor 212 and the granulator 202 can be the same container (not shown). In some aspects, the mixer/reactor 212 and the granulator 202 can be more than two containers. As non-limiting examples, In some instances, the $MgHPO_4$ and $CaHPO_4$ are formed in two different containers. In some instances, the $MgHPO_4$, and $CaHPO_4$ are formed in one container. In some instances, the $CaNH_4PO_4$ and $MgNH_4PO_4$ are formed in two different containers. In some instances, the $CaNH_4PO_4$ and $MgNH_4PO_4$ are formed in one container. In some instances, the $MgHPO_4$ and $CaHPO_4$ are formed in two different containers and the $CaNH_4PO_4$ and $MgNH_4PO_4$ are formed in one container. In some instances, the $MgHPO_4$ and $CaHPO_4$ are formed in two different containers and the $CaNH_4PO_4$ and $MgNH_4PO_4$ are formed in two different containers. In some instances, the $MgHPO_4$ and $CaHPO_4$ are formed in one container and the $CaNH_4PO_4$ and $MgNH_4PO_4$ are formed in one container. In some instances, the $MgHPO_4$ and $CaHPO_4$ are formed in one container and the $CaNH_4PO_4$ and $MgNH_4PO_4$ are formed in the same container as the $MgHPO_4$ and $CaHPO_4$. In some instances, the $MgSO_4$ and $CaSO_4$ are formed in two different containers. In some instances, the $MgSO_4$ and $CaSO_4$ are formed in one container. In some instances, the $CaNH_4PO_4$ and $MgNH_4PO_4$ are formed in two different containers and the $MgSO_4$ and $CaSO_4$ are formed in one container. In some instances, the $CaNH_4PO_4$ and $MgNH_4PO_4$ are formed in two different containers and the $MgSO_4$ and $CaSO_4$ are formed in two different containers. In some instances, the $CaNH_4PO_4$ and $MgNH_4PO_4$ are formed in one container and the $MgSO_4$ and $CaSO_4$ are formed in one container. In some instances, the $CaNH_4PO_4$ and $MgNH_4PO_4$ are formed in one container and the $MgSO_4$ and $CaSO_4$ are formed in in the same container as the $CaNH_4PO_4$ and $MgNH_4PO_4$.

In some aspects, the $MgHPO_4$, $CaHPO_4$, $CaNH_4PO_4$, $MgNH_4PO_4$, $MgSO_4$, $CaSO_4$, and/or $(NH_4)_2SO_4$ are formed at a temperature of at least, at most, equal to, or between any two of 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 101, 102, 103, 104, 105, 106, 107, 108, 109, 110, 111, 112, 113, 114, 115, 116, 117, 118, 119, 120, 121, 122, 123, 124, 125, 126, 127, 128, 129, 130, 131, 132, 133, 134, 135, 136, 137, 138, 139, 140, 141, 142, 143, 144, 145, 146, 147, 148, 149, or 150 °C, such as between 40 and 150 °C or between 100 and 150 °C or between 75 and 150 °C or between 55 to 75 °C.

In some instances, the fertilizer can be extruded before drying. The extruder can extrude the fertilizer at pressures at least, at most, equal to, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, and 40 bar. The extruder can extrude the fertilizer at temperatures at least, at most, equal to, or between any two of -20, -15, -10, 0, 5, 10, 15, 20, 25, 30, 35, 40, 45 and 50 °C. The extrudate can be sliced or divided before drying, such as by a die.

In certain aspect, the desired size of a final fertilizer product, such as a granule, can be 0.5 to 5 mm, or 1 to 4 mm, and having a size lower than 0.5 mm or 1 mm, and/or having a size bigger than 4 mm or 5 mm can be separated from the wet granulated mixture 222 in the one or more size screens 216. In certain aspects, the wet granulated mixture can be rounded and/or spheronized in a spheronizer. In some instances, the wet granulated mixture is contacted with a spheronizer for at least any one of, at most any one of, equal to any one of, or between any two of 5, 10, 15, 20, 25, 30, 35, 40, 50, or 60 seconds. The spheronizer in some instances has a rotating or rotatable disk capable of rotating at least any one of, at most any one of, equal to any one of, or between any two of 200, 500, 1000, 1500, 2000, 2500, 3000, 3500, 4000, 4500, 5000 rpm. In certain aspects, the wet granulated mixture can be dried in the dryer 104, 204 at a temperature 40 °C to 85 °C, or at least any one of, at most any one of, equal to any one of, or between any two of 40, 45, 50, 55, 60, 65, 70, 75, 80 and 85 °C. In some aspects, the dryer 104, 204 can be a fluid bed dryer, drum dryer, or flash dryer. In some aspects, the wet granulated mixture can be dried in the dryer 104, 204 with an hot air flow having a flow rate of at least any one of, at most any one of, equal to any one of, or between any two of 100, 150, 200, 250, 300, 350, 400, 450, and 500 $m^3$/hr and/or a rotation of at least any one of, at most any one of, equal to any one of, or between any two of 5, 10, 15, 20, 25, 30, 35, 40, 45, and 50 rpm.

### III. Methods of Using the Fertilizer

The fertilizer, including fertilizer granules, compositions containing the fertilizer, and fertilizer blends containing the fertilizer of the present disclosure can be used in methods of increasing the amount of one or more plant nutrients in soil and of enhancing plant growth. Such methods can include applying to the soil an effective amount of a composition and/or blend containing the fertilizer of the present invention. The method may include increasing the growth and yield of crops, trees, ornamentals, etc., such as, for example, palm, coconut, rice, wheat, corn, barley, oats, and/or soybeans. The method can include applying the fertilizer blend of the present invention to at least one of a soil, an organism, a liquid carrier, a liquid solvent, etc. The composition(s) and/or fertilizer blends(s) containing the fertilizer can be applied to plants and/or soil as a top dressing fertilizer, basal fertilizer, and/or through any suitable method of application.

Non-limiting examples of plants that can benefit from the fertilizer of the present invention include vines, trees, shrubs, stalked plants, ferns, etc. The plants may include orchard crops, vines, ornamental plants, food crops, timber, and harvested plants. The plants may include Gymnosperms, Angiosperms, and/or Pteridophytes.

The effectiveness of compositions comprising the fertilizer of the present invention can be ascertained by measuring the amount of phosphorus and optionally other nutrients in the soil at various times after applying the fertilizer composition to the soil. It is understood that different soils have different characteristics, which can affect the stability of the nutrients in the soil. The effectiveness of a fertilizer composition can also be directly compared to other fertilizer compositions by doing a side-by-side comparison in the same soil under the same conditions.

Examples

The present invention will be described in greater detail by way of specific examples. The following examples are offered for illustrative purposes only, and are not intended to limit the invention in any manner. Those of skill in the art will readily recognize a variety of noncritical parameters which can be changed or modified to yield essentially the same results.

**Example 1**

**Producing a complex fertilizer comprising nitrogen, phosphorous, and sulfur encapsulated within secondary calcium and magnesium nutrients**

A reaction of 368 g $MgCO_3/CaCO_3$ dolomite and a mixture of 196 g $H_3PO_4$ and 394 g $H_2SO_4$ at 75°C can produce 125 g $CaHPO_4$, 131 g $MgHPO_4$, 238 g $Mg(HSO_4)_2$, and 215 g $Ca(HSO_4)_2$.

A reaction of 34 $NH_3$ and the 125 g $CaHPO_4$ and 131 g $MgHPO_4$ at 75°C can produce 140 g $CaNH_4PO_4$ and 148 g $MgNH_4PO_4$.

A reaction of $NH_3$ and the 215 g $Ca(HSO_4)_2$ and 238 g $Mg(HSO_4)_2$ at 75°C can produce 244g $(NH_4)_2Ca(HSO_4)_2$ and 272g $(NH_4)_2Mg(HSO_4)_2$.

The mixture can be dried slowly at 40°C, then the dried material can be pelleted to a particle size of 3x4 mm.

A fertilizer comprising all of $CaNH_4PO_4$, $MgNH_4PO_4$, $(NH_4)_2Ca(HSO_4)_2$, and $(NH_4)_2Mg(HSO_4)_2$ can also be prepared by combining the steps above.

The final product can contain 11% N, 11.5 % P as represented by $P_2O_5$, 15.5% S. The content of N, P, and S can be varied with the ratio of $H_3PO_4$ and $H_2SO_4$. By increasing the $H_3PO_4/H_2SO_4$ ratio to 1.5 it is possible increase N and P as represented by $P_2O_5$ content to 16.5% and 17.2%, respectively.

All of the methods disclosed and claimed herein can be made and executed without undue experimentation in light of the present disclosure. While the compositions and methods of this invention have been described in terms of preferred embodiments, it will be apparent to those of skill in the art that variations may be applied to the methods and in the steps or in the sequence of steps of the method described herein without departing from the concept, spirit and scope of the invention. More specifically, it will be apparent that certain agents which are both chemically and physiologically related may be substituted for the agents described herein while the same or similar results would be achieved. All such similar substitutes and modifications apparent to those skilled in the art are deemed to be within the spirit, scope and concept of the invention as defined by the appended claims.

**Claims**

1.  A fertilizer composition comprising:

    calcium ammonium phosphate ($CaNH_4PO_4$), magnesium ammonium phosphate ($MgNH_4PO_4$), or a combination of $CaNH_4PO_4$ and $MgNH_4PO_4$; and

    a mixture of calcium sulfate and ammonium sulfate ($(NH_4)_2Ca(SO_4)_2$), a mixture of magnesium sulfate and ammonium sulfate ($(NH_4)_2Mg(SO_4)_2$), or a combination of the $(NH_4)_2Ca(SO_4)_2$, and the $(NH_4)_2Mg(SO_4)_2$.

2.  The fertilizer composition of claim 1, wherein the composition comprises:

    10 to 17 wt.% nitrogen (N), potassium (P) in an amount equivalent to 11 to 18 wt.% $P_2O_5$, and 10 to 16 wt.% sulfur (S); and/or

    5 to 10 wt.% calcium (Ca) and 5 to 10 wt.% magnesium (Mg).

3.  The fertilizer composition of any one of claims 1 and 2, wherein the composition further comprises a calcium phosphate, a magnesium phosphate, ammonium phosphate ($(NH4)_3PO_4$), magnesium oxide (MgO), calcium oxide (CaO), zinc oxide (ZnO), nickel oxide (NiO), magnesium carbonate ($MgCO_3$), calcium carbonate, ($CaCO_3$), iron (II) carbonate ($FeCO_3$), nickel sulfate ($NiSO_4$), zinc sulfate ($ZnSO_4$), iron (II) sulfate ($FeSO_4$), iron (II) phosphate ($FePO_4$), and/or dolomite.

4.  The fertilizer composition of any one of claims 1 to 3, wherein the composition does not comprise a binding agent separate from the calcium ammonium phosphate ($CaNH_4PO_4$), magnesium ammonium phosphate ($MgNH_4PO_4$), $(NH_4)_2Ca(SO_4)_2$, or $(NH_4)_2Mg(SO_4)_2$.

5.  The fertilizer composition of any one of claims 1 to 4, wherein:

    at least a portion of the ammonium sulfate is absorbed on the surface of the calcium ammonium phosphate and/or magnesium ammonium phosphate;

    wherein at least a portion of the $(NH_4)_2Ca(SO_4)_2$ and/or a portion of the $(NH_4)_2Mg(SO_4)_2$ is encapsulated by the calcium ammonium phosphate and/or magnesium ammonium phosphate;

the fertilizer is homogenous; and/or
the composition comprises a dried gel.

6. The fertilizer composition of any one of claims 1 to 5, wherein the composition comprises:

a combination of $CaNH_4PO_4$ and $MgNH_4PO_4$; and/or
a combination of $(NH_4)_2Ca(SO_4)_2$ and $(NH_4)_2Mg(SO_4)_2$.

7. The fertilizer composition of any one of claims 1 to 6, wherein the fertilizer composition is a granular fertilizer.

8. The fertilizer composition of any one of claims 1 to 7, wherein the composition does not comprise one or more of ammonium nitrate, urea, and/or a polymer.

9. A method of producing a fertilizer composition, the method comprising the steps of:

(a) contacting CaO, MgO, $MgCO_3$, $CaCO_3$, and/or dolomite with phosphoric acid ($H_3PO_4$) and sulfuric acid ($H_2SO_4$) to generate a first reaction product comprising:

calcium hydrogen phosphate ($CaHPO_4$) and/or magnesium hydrogen phosphate ($MgHPO_4$); and
calcium hydrogen sulfate ($Ca(HSO_4)_2$) and/or magnesium hydrogen sulfate ($Mg(HSO_4)_2$);

(b) contacting the first reaction product with a source of ammonia to generate a second reaction product comprising:

calcium ammonium phosphate ($CaNH_4PO_4$) and/or magnesium ammonium phosphate ($MgNH_4PO_4$); and
a mixture of calcium sulfate and ammonium sulfate ($(NH_4)_2Ca(SO_4)_2$) and/or a mixture of magnesium sulfate and ammonium sulfate ($(NH_4)_2Mg(SO_4)_2$); and

optionally drying the second reaction product to form a solid fertilizer composition.

10. The method of claim 9, further comprising:

(c) combining the second reaction product and $CaSO_4$, preferably at a weight ratio of approximately 3:1 to 1:3; and/or
the weight ratio of phosphoric acid ($H_3PO_4$) and sulfuric acid ($H_2SO_4$) in step (a) to CaO, MgO, $MgCO_3$, $CaCO_3$, and/or dolomite is 1:1 to 3:1.

11. The method of any one of claims 9 to 10, wherein steps (a) and/or (b) occurs at 55 to 75°C.

12. The method of any one of claims 9 to 11, wherein:

the source of ammonia is ammonium hydroxide ($NH_4OH$) and/or ammonia ($NH_3$);
in step (a) dolomite contacts phosphoric acid ($H_3PO_4$) and sulfuric acid ($H_2SO_4$); and/or
in step (a) $MgCO_3$ and $CaCO_3$ contacts phosphoric acid ($H_3PO_4$) and sulfuric acid ($H_2SO_4$).

13. The method of any one of claims 9 to 12, wherein a stoichiometric excess of phosphoric acid ($H_3PO_4$) and sulfuric acid ($H_2SO_4$) needed to form the calcium hydrogen phosphate ($CaHPO_4$) and/or magnesium hydrogen phosphate ($MgHPO_4$) and calcium hydrogen sulfate ($Ca(HSO_4)_2$) and/or magnesium hydrogen sulfate ($Mg(HSO_4)_2$) is present in step (a) and a portion of the stoichiometric excess of phosphoric acid ($H_3PO_4$) and sulfuric acid ($H_2SO_4$) contacts the source of ammonia of step (b) to form ammonium phosphate ($(NH_4)_3PO_4$) and/or ammonium sulfate ($(NH_4)_2SO_4$).

14. A method of fertilizing, the method comprising contacting a plant, a soil, water, or a combination thereof with the fertilizer compositions of any one of claims 1 to 8.

15. A method of increasing pH of a soil, the method comprising contacting a soil with the fertilizer compositions of any one of claims 1 to 8.

FIG. 1

FIG. 2

Europäisches
Patentamt

European
Patent Office

Office européen
des brevets

**EUROPEAN SEARCH REPORT**

Application Number

EP 22 18 8759

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 01/23325 A1 (B & C SERVICES SARL [FR]; DAVILLER DANIEL [FR]) 5 April 2001 (2001-04-05) * claims * | 1-15 | INV. C05B1/00 C05B7/00 C05C3/00 C05D3/02 C05D9/02 |
| A | CN 109 321 944 A (YUNNAN CHUANGYI PHOSPHOR INDUSTRY TECH CO LTD) 12 February 2019 (2019-02-12) * claims * | 1-15 | ADD. C05G5/40 C05G5/12 |
| A | WO 2014/181149 A2 (SAUDI BASIC IND CORP [SA]) 13 November 2014 (2014-11-13) * claims; examples; table 1 * | 1-15 | |
| A | US 2022/204417 A1 (HEGDE RAVI [IN] ET AL) 30 June 2022 (2022-06-30) * paragraph [0007]; claims * | 1-15 | |
| A | WO 2017/151017 A1 (MINERAL AND CHEMICAL COMPANY EUROCHEM JOINT STOCK COMPANY [RU]) 8 September 2017 (2017-09-08) * claims; examples * | 1-15 | |

**TECHNICAL FIELDS SEARCHED (IPC)**

C05B
C05C
C05D

The present search report has been drawn up for all claims

| Place of search | Date of completion of the search | Examiner |
|---|---|---|
| The Hague | 23 January 2023 | Grittern, Albert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 22 18 8759

This annex lists the patent family members relating to the patent documents cited in the above-mentioned European search report.
The members are as contained in the European Patent Office EDP file on
The European Patent Office is in no way liable for these particulars which are merely given for the purpose of information.

23-01-2023

| Patent document cited in search report | | | Publication date | Patent family member(s) | | | Publication date |
|---|---|---|---|---|---|---|---|
| WO 0123325 | A1 | | 05-04-2001 | AT | 314334 | T | 15-01-2006 |
| | | | | DE | 60025238 | T2 | 13-07-2006 |
| | | | | DK | 1218316 | T3 | 15-05-2006 |
| | | | | EP | 1218316 | A1 | 03-07-2002 |
| | | | | ES | 2254232 | T3 | 16-06-2006 |
| | | | | FR | 2798926 | A1 | 30-03-2001 |
| | | | | WO | 0123325 | A1 | 05-04-2001 |
| CN 109321944 | A | | 12-02-2019 | NONE | | | |
| WO 2014181149 | A2 | | 13-11-2014 | AR | 094322 | A1 | 29-07-2015 |
| | | | | AU | 2013389228 | A1 | 03-12-2015 |
| | | | | CN | 105324351 | A | 10-02-2016 |
| | | | | EP | 2994441 | A2 | 16-03-2016 |
| | | | | TW | 201506001 | A | 16-02-2015 |
| | | | | US | 2016075607 | A1 | 17-03-2016 |
| | | | | WO | 2014181149 | A2 | 13-11-2014 |
| US 2022204417 | A1 | | 30-06-2022 | US | 2022204417 | A1 | 30-06-2022 |
| | | | | WO | 2022144683 | A1 | 07-07-2022 |
| WO 2017151017 | A1 | | 08-09-2017 | CN | 108473380 | A | 31-08-2018 |
| | | | | EA | 201692457 | A1 | 29-09-2017 |
| | | | | RU | 2626947 | C1 | 02-08-2017 |
| | | | | WO | 2017151017 | A1 | 08-09-2017 |

EPO FORM P0459

For more details about this annex : see Official Journal of the European Patent Office, No. 12/82